# EUROPEAN PATENT APPLICATION

(11) **EP 4 509 939 A1**
(43) Date of publication of application: **19.02.2025**
(21) Application number: 23191653.7
(22) Date of filing: 16.08.2023
(51) Int. Cl.: G05B 23/02

(54) **SYSTEM AND METHOD OF IMPLEMENTING A DIGITAL TWIN FOR PREDICTIVE MAINTENANCE OF DEVICES IN A VEHICLE**

(71) Applicant: Aptiv Technologies AG, 8200 Schaffhausen (CH)
(72) Inventor: KORTA, Jakub Antoni, Dublin, 2 (IE); HOLON, Krzysztof, Dublin, 2 (IE); WYSZYNSKI, Grzegorz, Dublin, 2 (IE)
(74) Representative: Lewis Silkin LLP

(57) **Abstract**

A monitoring system and associated method for implementing a digital twin of an electronic device in a vehicle, for the purpose of predicting when maintenance is needed. The system (10) comprises a device (11) to be monitored; a sensor (12) monitoring a characteristic (e.g. temperature, voltage, vibration) of the device and a simulation model (e.g. digital twin/model 14) that receives an input from the sensor (13) and executes a simulation based on the monitored characteristic. A current state of the device can therefore be monitored and ultimately reported to a user to prompt maintenance action.

## Description

### Introduction

The present disclosure relates to a system and method of implementing a digital twin of devices in a vehicle. The digital twin is to used for predictive maintenance, such as providing an alert that maintenance is expected to be needed, before actual failure.

### Background

Development of autonomous driving (AD) technology, as well as ever the increasing application of electronic advanced driver assistance systems (ADAS) installed in contemporary road vehicles, has necessitated the development and implementation of new device health monitoring systems.

The need for such monitoring is particularly driven by the fact that contemporaneous vehicle electronic controllers are designed to replace a human driver and execute life-critical actions. By taking the control over a vehicle, such systems become responsible for the health and life of vehicle occupants, as well as the people in the vehicle's immediate surroundings. Thus, any abrupt malfunction that can result in system failure must be prevented.

A known method to address the foregoing need is to monitor the state of the on-board systems and report to the driver/occupant, in any case where suspicious device behaviour is detected. This type of health monitoring system is under constant development to meet the complexity of new electronic devices but, while useful and well established in the industry, it is burdened with a significant flaw - namely, it reports failure or malfunction *after* it is detected.

This *a posteriori* detection does not warn the vehicle user about an approaching malfunction, hence it does not allow for anticipating and preventing system failure before the event. Moreover, this type of system provides information only about selected regions of the device, thereby enabling only predetermined monitoring of components.

By contrast, a predictive maintenance system may continuously observe various operational components, estimate current technical condition and warn the user about the approaching malfunctions. In this case, the vehicle owner can arrange appropriate maintenance actions, in advance, and prevent unexpected system failures.

One way to implement a predictive maintenance system is to use signal processing methods, where crucial signals like current consumption, voltage drops or similar are measured in real time and analyzed using machine learning anomaly detection methods. Depending on the solution type, these approaches may require initial calibration or can be self-learning. However, such anomalies happen generally just before failure, leaving not much time for reaction for end user.

### Summary

The present disclosure seeks an alternative or supplement to the foregoing monitoring solutions, particularly enabling more time for a vehicle occupant to be forewarned of a component failure.

According to a first aspect, a method of implementing a digital twin is outlined according to claim 1, thereby enabling predictions of status for at least one electronic system/subsystem/device/component of the vehicle.

In one form the method involves the steps of data collection for building a simulation model of at least one device of a vehicle. Herein the term "device" refers to a system or subsystem of electronic components to perform a particular function in a vehicle. Likewise, term "simulation model" refers to a digital twin (DT), model, and main algorithm interchangeably and without limitation. The simulation model is configured to describe at least one modelled characteristic (e.g. material stress, temperature, electrical current, etc.) of the at least one device. In a further step, at least one physical characteristic of the at least one device is monitored. Thereafter, the simulation model can be subjected to the same conditions as the at least one device, based at least in part on the monitored physical characteristic.

In this way, a user may ultimately be provided with insight into the current state of the real-world counterpart. In embodiments, an action/alert (visual/audible/tactile) may be issued, aimed at providing information to a vehicle user/owner and minimizing the risk of a permanent failure of the component, allowing a user to gain additional time for safe maintenance action.

In embodiments, additional service life, i.e. temporary failure avoidance of a unit, can be obtained by minimizing the load on the monitored components, which are close to failure.

In embodiments, at the data collection step, it may be possible to find a correlation between the available input signals and, based on the correlation results, eliminating redundant inputs.

In embodiments, data collection comprises material and assembly description, production and service history.

In embodiments, the simulation model is performed in quasi-real time, based on the monitored physical characteristic. Combined with historic collection of the device's past states, the method enables an estimate of remaining useful lifetime.

In embodiments, there is at least one sensor integrated into the at least one device being measured or designed as a separate module. The sensor system may incorporate sensors with data bus communication capabilities and/or sensors directly connected to readout electronics.

In particular forms, the simulation model may be implemented by the use of simplified analytical models or surrogate models, such as supervised machine learning models or neural networks. The models may be created upfront, because they require validation, based on multiple additional sensors, which may be not available in the real device, e.g. due to excessive cost.

In a broad sense, the inventive concept recognises the use of digital twin (DT) technology to assist monitoring in a vehicle, and particularly an automotive vehicle, environment.

The concept of a digital twin involves building a numerical/virtual replica of a real device, e.g. which stores all the data necessary to describe the complete lifetime of its physical counterpart. Depending on the needs, a DT database can contain various information, including (but not limited to) material and assembly description, production and service history, digital models of the device, as well as the state of this device.

Specifically, an important constituent of the DT is its numerical simulation model, which allows it to describe a state (e.g. material stress, temperature, electrical current, etc.) of the entire twin device. Such a simulation model may be subject to the same operations as its physical counterpart, ultimately providing a user with insight into the current state/performance of the real-world counterpart.

In practice, the insight is obtained by feeding the DT simulation model with input signals collected at the real device, and performing simulations in quasi-real time. DT-derived information about the current state of the physical device, which may be combined with historic collection of the device's past states, enables the system to estimate a remaining useful lifetime and, hence, predict its failure. Such insight will preferably be available at least earlier than present systems. This extra time will provide the operator (e.g. driver, owner, fleet operator) with an opportunity to take maintenance action before an event physically occurs.

The DT technology described herein is dependent on so-called internet-of-things (IoT) capabilities, e.g. collecting, distributing, storing and processing of data are noteworthy components, which require dedicated features to enable accuracy and enhance overall functionality. In a particular form, to facilitate seamless data integration, the sensor system may incorporate sensors with data bus communication capabilities (CAN, LIN, Flexray, Ethernet) as well as sensors directly connected to readout electronics. Typically, the sensing electronics can be integrated as part of the device being measured, which is justified in cases where self-prediction in real-time is desired. However, it can also be designed as a separate module to ensure functionality even in the event of damage or malfunction of the observed device.

To provide data to the model, in certain embodiments the system can either ensure a reliable and noise-resistant transfer of preprocessed data in real-time through a robust communication protocol or utilize a large buffer that delivers data in the form of data packets (repeatedly or on demand). This preprocessing function may consider some initial data manipulations like filtering, storing, conditioning, i.e. whatever is needed as a reliable input for the prediction model.

It will be apparent that the present disclosure depends on the construction of the model and environment where the model is running. For large packets of data it is more useful to use cloud computing and/or, in the case of real time solutions, it is expected to have preprocessing and/or the model close to the measured device or as a part of it. Several predictive models may be in use.

For example, health monitoring systems usually concentrate on current data and are able to detect malfunction in a current state, whereas the present system is preferably working with a monitored device from the very beginning of its utilization. In which case, the DT can calculate load cycles and estimate a remaining useful lifetime.. On the other hand, many solutions operating from the cloud utilize data from existing sensors that are part of vehicle functionalities. By contrast, the present disclosure describes the concept of realizing a digital twin-based predictive maintenance system particularly suited for monitoring of automotive electronic devices.

In a second aspect, according to claim 8 the disclosure outlines a system of data collection at a vehicle, for the purpose of feeding into a digital twin, thereby enabling predictions of status for at least one electronic or mechanical device/component of the vehicle.

In a third aspect, a vehicle, e.g. an automotive vehicle incorporates the system according to earlier aspects

According to a fourth aspect, there is provided a non-transitory computer readable medium including instructions, which when executed by one or more processors, implement the foregoing method. According to a further aspect, there is provided a computer software product including instructions which, when executed by one or more processors, implement the method.

As outlined above, the problem of realizing predictive maintenance functionality of automotive electronic controllers is solved by using a digital twin (virtual/numerical representation) of the monitored device.

The task of collecting data from the device (e.g. electronic controller) operating in the vehicle is solved by providing appropriate sensors, such as temperature sensors (e.g. thermistors, thermocouples, RTD or semiconductor), vibration sensors (e.g. piezoelectric or MEMS capacitance accelerometers), and/or humidity sensors (e.g. resistive, capacitive, chilled mirror hygrometer) on the monitored device.

The task of monitoring the local health state estimation, akin to that performed by traditional health state estimation systems, is solved in the present disclosure by implementation of a digital twin of the monitored PCB assembly, which allows for near-real time numerical simulation of the entire device, showing its state in all areas, including those where sensors are not mounted.

The aspect of tuning simplified simulation models, in order to maintain accurate input-output behaviour may be solved herein by using a hybrid experimental/simulation approach. The simulation model parameter tuning may be based on experimental data, whenever this is available, and supplemented by the simulation results for these scenarios and/or regions of the device, e.g. for which the experimental data is not available.

The problem of potentially long simulation times of detailed numerical models is solved by the use of simplified analytical models or surrogate models, such as supervised machine learning models or neural networks. The models may be created upfront, because they require validation, based on multiple additional sensors, which may be not available in the real device, e.g. due to excessive cost.

The preferred surrogate model approach is based on neural networks (NN), which are trained on data collected on a real device tested in the field. This assures maximum fidelity of the input data. In other words, a particular device can be tested to failure and modelled in detail, which is available as a basis for the digital twin.

Calculated parameters (e.g. temperature, strain, stress, etc.) and/or input parameters (e.g. humidity) may be used herein to estimate the remaining useful lifetime of the monitored device. In order to do so, durability models are employed which provide information about the state and performance of the device, which is expressed as a function of input loads.

Some examples of models used are the following: Arrhenius model for temperature dependent lifetime model, Lawson model for combined temperature-humidity loads, Eyring model for combined thermo-mechanical loads. The foregoing list is for information purposes only, in practice the type of implemented durability model depends on various factors, such as possible stress factors (some ECUs are sealed, which excludes the humidity loads on the electronic components), mounting area and others.

In a case when the estimated lifetime of a monitored component is approaching its end, the system may take actions aimed at providing information to vehicle user/owner and minimizing the risk of a permanent failure of the component, allowing a user to gain additional time for safe maintenance action.

User information may be communicated by providing a visual alert on the vehicle's dashboard, and generating appropriate outputs to the vehicle's online (IoT) dashboard environment. Furthermore, information can be sent to the OEM, which collects failure data in a cloud of connected vehicles. Additional service life, i.e. temporary failure avoidance of a unit, can be obtained by minimizing the load on the monitored components, which are close to failure. This may be achieved by lowering power consumption and efficiency, hence reduction of heat generation, on non-safety related features, like infotainment or comfort features.

Other approaches are possible, such as in multiprocessor systems with external computational processors (e.g. for artificial intelligence applications, or other purposes), where the system can support balanced wear over a long period of time based on utilization of each unit.

In the case of unknown power consumption, depending on driver behaviour or an environment where the vehicle is used, or unknown additional devices plugged into the system may reduce computation power to assure unexpensive maintenance avoiding damage. This may become more critical in vehicles where electrical architecture is more configurable and the OEM cannot predict how much heat would be generated by components.

The problem of undesirable high cost associated with instrumentation of a production-grade automotive controller with a large number of sensors needed to collect input data for a digital twin simulation, is solved herein by finding a correlation between the available input signals and, based on the correlation results, eliminating redundant inputs. This can lead to a reduction of the overall number of sensors used in the device in the field and reduce the cost of DT implementation. Correlation solutions may be found by monitoring a fleet of connected vehicles to build up a predictive model, e.g. to find the critical monitoring points which give a pre-warning of failure. Another possibility is to find correlation(s) between the large number of collected input signals, during the DT model validation. For example, each time one component is performing computations, another is also engaged. Knowing the correlation in power dissipation between these components, allows use of only one sensor on one of them, instead of two on both.

The problem of data acquisition is solved by relying, whenever possible, on built-in sensors. Additional discrete sensors could be read out using necessary additional lines from a main microprocessor, either analog (in case of analog sensors) or communication lines (in case of digital sensors). The main microcontroller may handle sampling and collecting the data.

The problem of data storage may be solved by processing the input information with a real-time (or close to real-time) processing approach, thus leaving only a need to store the results of prediction. The data can be stored locally or can be sent, following IoT philosophy, to a main database, allowing conclusions to be drawn not only on single module level, but also on more generalized ones, e.g. for production lot, for production year or for whole design.

The problem of keeping data even when device is malfunctioning may be solved by using external device or cloud computing with a sensors readout part near or inside the measured device.

The problem of computational power may be solved with external or cloud computing.

The problem with long and expensive connections to sensor(s) and complexity of production may be solved using a readout device near or inside measured device.

### Brief Description of Drawings

Aspects of implementation will be described with reference to the accompanying drawings in which:

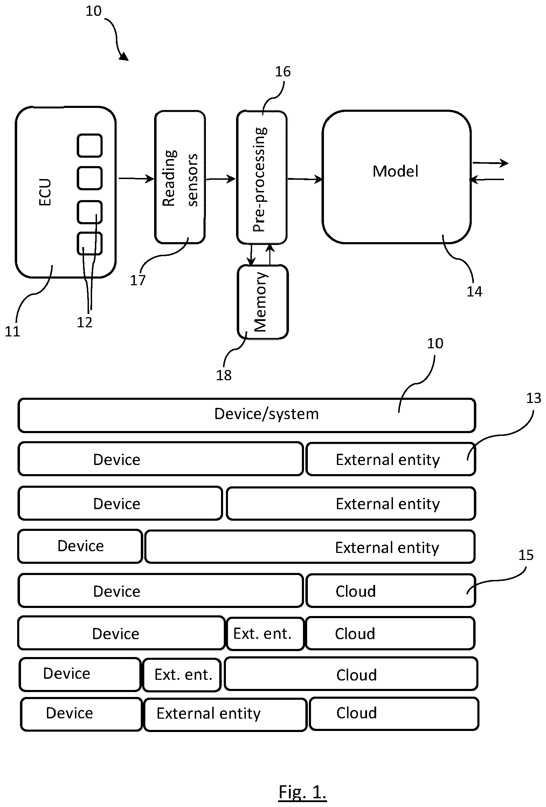

Figure 1 illustrates a flow diagram of a system according to the invention.

### Detailed Description

The following description presents exemplary embodiments and, together with the drawings, serves to explain principles of the disclosure. However, the scope of the invention is not intended to be limited to the precise details of the embodiments or exact adherence with all system features and/or method steps, since variations will be apparent to a skilled person and are deemed also to be covered by the description. Terms for components used herein should be given a broad interpretation that also encompasses equivalent functions and features.

In some cases, several alternative terms (synonyms) for structural, system or method features have been provided but such terms are not intended to be exhaustive. Descriptive terms should also be given the broadest possible interpretation; e.g. the term "comprising" as used in this specification means "consisting at least in part of" such that interpreting each statement in this specification that includes the term "comprising", features other than that or those prefaced by the term may also be present. Related terms such as "comprise" and "comprises" are to be interpreted in the same manner.

The description herein refers to embodiments with particular combinations of steps or features, however, it is envisaged that further combinations and cross-combinations of compatible steps or features between embodiments will be possible. Indeed, isolated features may function independently as an invention from other features and not necessarily require implementation as a complete combination.

It will be understood that the illustrated embodiments show applications only for the purposes of explanation. In practice, the invention may be applied to many different configurations, where the embodiment is straightforward for those skilled in the art to implement.

According to the present disclosure, digital twin technology allows for building and simulating in near-real time, a model of a monitored physical device. In a particular example, the device for which the DT is created may be an automotive printed circuit board assembly (e.g. a PCB populated with electronic components), as well as mechanical components combined with the electronics (such as housing, connectors, external cooling devices, etc). A vehicle may comprise plurality of devices for which a DT is created. For example, there may be up to ten monitored devices in a vehicle.

The intention behind the DT is to create accurate, yet fast for solving, simulation models and use them for calculating the values of the selected state/performance indices, e.g., temperature or material stress. Such simulation models are preferably solved constantly/continuously, producing output values in near-real time. For simulation purposes, the model is fed with input data collected on a real, physical device by appropriate sensors. The current outputs, as well as historical values, are stored in the system, and used for estimation of a device's wear, allowing prediction of its possible failure.

Depending on the simulation model complexity, i.e. the level of detail incorporated in the model, as well as the size of the analysed domain, a typical industry-class simulation using so-called Finite Element or Finite Volume methods, can require analysis times from minutes, to hours (or even days), for a single established simulation scenario. However, as stated above, a DT is required to produce results in near-real time, thus requires a different approach to the problem.

Accordingly, it is proposed herein to use simplified analytical, or so-called surrogate models to substitute lengthy-to-solve standard numerical analyses. The surrogate models are approximations built upon experimental and/or analytical results, which allow one to obtain the output results in a time-efficient manner. Surrogates can be built using analytical, statistical or machine learning (ML) techniques. If enough experimentally derived input data is available, neural networks (NN) can also be used as a surrogate. A NN-based approach is preferred because neural networks can be trained using the data collected on a real device, operating in the field. This, in turn, allows for covering all the details resulting from manufacturing uncertainties, which are difficult to cover in standard numerical simulation models.

Other methods are also possible. For example, simplified analytical modelling can be used in specific applications, like the temperature dependence between the selected points of the device. For such problems, a technique based on a so-called thermal network can be utilized, which requires solution of a Fourier heat flow equation.

Implementation of a surrogate model simplifies the computational problem, allowing for obtaining the solution in timely manner, however it requires determination of appropriate model parameter values. This step is needed in order to tune the surrogate model, to properly represent the input-output dependency within the considered monitored device's operational conditions.

In the approach described herein, the surrogate's parameter tuning process is based on a combination of experimental and simulation-derived data. The reason for this approach is that the experimental data is not always available in sufficient amounts. In such situations, it can be supplemented by the results of high-fidelity numerical results (obtained by standard simulations using, e.g. an analytical approach, Finite Elements or Finite Volume Methods).

Moreover, the experimental results frequently show only local information, such as a temperature measured at one point, where the temperature sensor is mounted. In contrast, numerical simulation models can be used to calculate the output variable (e.g. a temperature field) in the entire domain, i.e. in the entire device.

Furthermore, inevitable numerical simulation errors can be quantified and understood, based on the available experimental data. This combination of different input data types allows the surrogate model to accurately describe the behaviour of the observed device in broad spatial (areas of the device not instrumented with the sensors) and operational scopes (behaviour of the device in operational scenarios not covered by the experiments).

DT validation is typically performed based on a number of sensors mounted on a real device. In real automotive products, however, this approach is often not possible due to the high cost of excessive instrumentation for monitoring. Moreover, the large quantity of data transfer and storage can add complexity and even further cost to the implementation of a DT.

For this reason, it is proposed that the DT simulation model is implemented in such a way that it can be used with a minimum possible number of inputs, which values are collected in the field (hence, a minimum possible number of sensors used in the actual device operating in the field).

To achieve this goal, it is proposed to perform a correlation analysis on the input signals available from a prototype of the physical twin, which can be equipped with a large number of sensors in the DT building phase. In other words, a single test or prototype device can be deployed in a vehicle and fully equipped with sensors, even if the commercial embodiment of the vehicle is not to include such a fully sensor-loaded device.

Based on correlation analysis results, redundant input signals can be identified and removed from the DT's simulation models, leading to an optimal number of data collecting devices being deployed in the vehicles operating in the field. In this way, excessive instrumentation being incorporated into commercially available vehicles, and its associated cost, is avoided.

Results generated by a DT indicate the state of the device in near-real time. As explained above, the system can be configured to show any or more of temperature field, material stress field, electric current flowing through a PCB assembly, or other quantities relevant to the wear of the monitored device. These values are stored and analysed, in order to continuously count/monitor use cycles from the beginning of the device's service life, calculate the remaining lifetime (e.g. cycles) and predict the moment of its failure.

In order to do so, appropriate failure models are utilised, allowing an estimate of the health state of electronic devices. Some examples of failure models which can be used for this purpose are the Arrhenius, Eyring or Peck models, however, the selection of the most appropriate approach depends on the particular implementation.

The output produced by the failure model is taken as an indication of the health state of the device, allowing an alarm to be communicated to the vehicle user about a possible failure in advance.

According to the present disclosure, it is suggested to use a quantity called: ATBF (averaged time before failure), assuming the same average usage as up to this time. This quantity can be defined for:
- Each of components *ATBF_{comp,i}*
- Whole system *ATBF_{systemi}* = min (*ATBF_{comp,i}*)

By way of example, where an ATBF for the whole system - 1 year would mean that if an end user does not change his habits and other conditions do not change (temperature, vibration etc.) one can expect the failure to happen in 1 year.

Such a quantity, to be the most useful, shall be an estimation of the earliest possible failure. This definition makes it straightforward to up-combine predictions from single component level up to SoC, module, sub-system, systems and whole architecture. It also opens a road to fusion with a signal-based approach.

The system is equipped with multiple sensors that serve as inputs to capture various types of data. A hardware or mixed hardware and software module (sensors reading electronic) is employed to interpret and analyse the incoming sensor information.

A preprocessing module may extract relevant data and perform necessary calculations or operations to prepare it for the main algorithm. The preprocessed data is then stored in a buffer for further processing. Finally, the system transmits the preprocessed data to the model for further analysis or utilization. This workflow ensures efficient handling of sensor inputs, intelligent data processing, and seamless transmission of preprocessed data for model applications.

The system may comprise four distinct stages for data processing: sensor(s), sensors reading module, preprocessing with storage/communication, final module that do the calculations.

Sensors: These are the physical devices responsible for capturing real-world data. They can include a variety of sensors, such as, but not limited to:
- current measurement;
- voltage measurement;
- temperature measurement;
- vibration measurement;
- cooling fan speed;
- cooling liquid circulation;

Sensors Reading electronic: This module is responsible for interfacing with the sensors, collecting data from each sensor, and potentially aggregating or synchronizing data from multiple sensors. It can be implemented as a dedicated hardware unit or as software running on a device with preprocessing part and the model itself. The sensors reading electronic shall be capable of obtaining measured values directly using dedicated sensors or probes or indirectly from communication (CAN, LIN, Ethernet, Flexray, etc.).

Preprocessing: The preprocessing stage involves performing necessary computations, transformations, or filtering on the captured sensor data. This stage can be included in a single device, such as a readout device or a dedicated hardware unit (with or without model), or it can be distributed across multiple devices to enhance computational capabilities. Alternatively, the preprocessing with the model can be moved to the cloud, where powerful computing resources are available for data analysis and transformation.

Memory: The preprocessed data is stored in a buffer or temporary storage (during processing or after it is done). The preprocessed data can then be transmitted to the model for analysis and decision-making. In the case of small models, the buffer can be small just to keep synchronization between sensors and the model. On the other hand, when a model is working on a large set of data, then appropriate memory shall be used. Moreover, when the memory needs to be large enough, then cloud computing is an option.

The flexibility of the system allows for different implementation approaches, depending on factors such as:
- real-time constraints,
- computational requirements,
- available resources,
- scalability.

It provides the option to consolidate all subsystems into a single device, distribute the subsystems across multiple devices, or utilize cloud-based resources.

The sensors and whole data acquisition system may be considered in two main variants:
1) System integrated with device that is measured. In this case the whole software and hardware may be implemented in one device. Numbers of sensors will determine complexity of an acquisition part. It may be a standalone system or a part of measured device (device that is monitored by the DT.
2) System with an acquisition system located outside measured device. In this case only a hub or gateway is part of the measured system. Data is only stored to be sent when needed. Calculation is done outside, e.g. by:
   - dedicated device, such as a custom, mobile device connected to measured system;
   - cloud computing, such as a laptop gathering data and sending it to cloud;
   - mixed model when part of the calculation is done directly after acquisition, and some calculations are waiting to be sent and processed later.

This all makes it possible to process data in diverse ways, when needed, e.g.:
- on-line calculation, when the system expects real-time results;
- off-line calculation, when results are updated with some maintenance event (smart phone connection, battery charging, diagnostic computer connection, etc.).

An example system architecture 10 is shown by Figure 1, i.e. a system 10 is outlined where several options can be considered to deal with data gathered from sensors 12 at an ECU 11. According to the lower part of the drawing, eight different alternatives are outlined where the system may be provided wholly within the device itself or in various alternatives where processing occurs outside the device being monitored. A "device" refers to a system 10 that is being observed, i.e. a measured system.

According to the lower portion of Figure 1, some parts of the system 10 may be placed at an "external entity" 13 from the device that can be another module in the vehicle or a dedicated module.

As mentioned, the invention suggests eight possibilities, as shown in the figure where functional boxes align with various parts of the system 10. Particular options include, where:
1. Everything (including processor/model 14) is placed into the measured device 10. The capabilities of the model strongly depend on the computational power of the module/processor. The higher the computational power, the greater the potential of the model in terms of processing complex data and delivering efficient results. A module with enhanced computational capabilities enables faster data processing, increased model complexity, and improved performance. Therefore, selecting a module with sufficient computational power is preferred to achieve optimal performance and unlocks the full potential of the model.
2. Model/DT processor housed outside measured device, e.g. in an external entity/module 13, where a vehicle is still able to do self-monitoring and utilize modules that have more computational power. Alternatively, the model may be maintained in the cloud 15, enabling the possibility to monitor the common state of many measured devices. However, in such a scenario real time processing is not an option.
3. Model 14 *and* preprocessing 16 outside measured device 11, suitable for models where the data sets are large. Buffers and memory 18 shall be appropriate. As above, the model 14 may be in an external module 13 or in the cloud 15.
4. Model 14, preprocessing 16 *and* readout electronics 17 outside the measured device. In this case, any malfunction of measured device 11 will not stop the whole predictive system. However, when there are a sizable number of sensors 12 it will need more wires to connect the device 11 with sensor reading electronics 17. Preprocessing 16 and the model 14 may be in the cloud 15. Sensor reading electronics 17 may be in an external device; or Preprocessing 16 and sensor reading electronics 17 may be in the external device with the model 14 in the cloud 15. In some forms all subsystems may be in an external entity.

In operation the foregoing method, implemented by the system, constantly monitors cycles of the device to failure. It will count cycles from the very beginning of operational life so it will know how many cycles are left, i.e. continuous monitoring of vehicle in use and under its measured operating conditions. The system builds an accurate an updated picture of the device so that one will generally know how many cycles remain. Failure may be predicted weeks in advance based on normal usage.

The invention also has application in the so-called "smart recycling" of a device which still has considerable service life remaining. For example, part of a vehicle may be damaged and render the vehicle as a whole unusable, but a monitored device may be implemented/reused with a new/refurbished vehicle because its remaining service life is known. Particularly, an operator will know the "health" of the reused component and its suitability for use in a vehicle.

In a typical vehicle there may be one large computing unit to be monitored or up to about ten devices in vehicle may be monitored. A separate DT may be built for each device. A PCB assembly may be one device according to the present disclosure, e.g. a discrete operating unit, comprised of multiple electronic components. It is expected that, if mounted in different parts of car, then multiple DTs may be built.

To summarise, the invention enables an efficient system for collecting and processing data to establish a simulation model (i.e. digital twin) of an electronic device in a vehicle for the purpose of monitoring its state and enabling prediction of its service life. The system may comprises a device to be monitored; a sensor monitoring a characteristic (e.g. temperature, voltage, vibration) of the device and a simulation model (e.g. digital twin) that receives an input from the sensor and executes a simulation based on the monitored characteristic. A current state of the device can therefore be monitored and ultimately reported to a user to prompt maintenance action.

## Claims

1. A method for predictive maintenance of an electronic device in a vehicle, comprising the steps of:
providing a simulation model of at least one modelled characteristic of the device;
monitoring at least one physical characteristic of the device in the vehicle;
subjecting the simulation model to the same conditions as the device, based on the monitored physical characteristic and numerical simulation; and
determining a current state of the device based on an output of the simulation model.

2. The method for predictive maintenance according to claim 1, wherein the determined current state is communicated to a vehicle user/operator.

3. The method for predictive maintenance according to claim 1 or 2, wherein the at least one modelled characteristic and/or at least one physical characteristic is one or more of: material stress, temperature, electrical current.

4. The method for predictive maintenance according to any preceding claim wherein, when the current state of the device is identified as within a predetermined threshold proximate to failure, an electrical load to the device is minimized, thereby prolonging its service life.

5. The method for predictive maintenance according to any preceding claim, wherein monitoring of the at least one physical characteristic is via at least one sensor integrated into the device or communicating therewith via as a separate module.

6. The method for predictive maintenance according to any preceding claim, wherein the simulation model is built by providing a prototype corresponding to the device, the prototype being equipped with a plurality of sensors for monitoring its operation.

7. The method for predictive maintenance according to claim 6, wherein a correlation analysis is performed on data collected from the prototype's monitored operation to reduce the number of sensors needed for monitoring the device.

8. A monitoring system for a vehicle, comprising:
at least one device to be monitored;
at least one sensor monitoring a characteristic of the at least one device;
a processor module configured for:
receiving an input derived from the at least one sensor;
executing a simulation model of the at least one device based on the monitored characteristic;
a memory module for storing information as to a current state of the at least one device based on an output of the simulation model.

9. The monitoring system of claim 8, wherein the at least one sensor is selected from one or more of: current measurement, voltage measurement, temperature measurement, humidity measurement, vibration measurement, cooling fan speed, cooling liquid circulation.

10. The monitoring system of claim 8 or 9, comprising a sensor reading module configured for interfacing with the at least one sensor, collecting data from the at least one sensor, and optionally aggregating or synchronizing data from multiple sensors of the at least one sensor.

11. The monitoring system of any preceding claim 8 to 10, comprising a preprocessing module configured for performing computations, transformations, and/or filtering of data derived from the at least one sensor.

12. The monitoring system of any preceding claim 8 to 11, wherein the system is integrated into the at least one device to be monitored.

13. The monitoring system of any preceding claim 8 to 11, wherein the modules are located external to the at least one device to be monitored.

14. The monitoring system of any preceding claim 8 to 13, comprising a reporting module for providing information to a vehicle user as to the state of the at least one device.

15. A non-transitory computer readable medium including instructions, which when executed by one or more processors, implement a method according to any of claims 1 to 7.
